# EUROPÄISCHE PATENTSCHRIFT

(11) **EP 1 502 859 B1**
(45) Veröffentlichungstag und Bekanntmachung des Hinweises auf die Patenterteilung: **17.09.2008**
(21) Anmeldenummer: 03017378.5
(22) Anmeldetag: 31.07.2003
(51) Int. Cl.: B65B 61/20, G01N 21/64, B65B 57/10

(54) **Vorrichtung und Verfahren zum Überprüfen eines aufgeklebten Gegenstandes**
Apparatus and method for checking an adhered object
Dispositif et procédé pour vérifier un objet collé

(43) Veröffentlichungstag der Anmeldung: 02.02.2005
(73) Patentinhaber: DEUTSCHE SISI-WERKE GmbH & Co. Betriebs KG, 69214 Eppelheim/Heidelberg (DE)
(72) Erfinder: Wild, Hans-Peter, 69214 Eppelheim (DE); Kraft, Eberhardt, 74924 Neckarbischopsheim (DE)
(74) Vertreter: Grünecker, Kinkeldey, Stockmair & Schwanhäusser Anwaltssozietät

(56) Entgegenhaltungen:
- DE-A- 3 128 280
- US-A- 3 650 400
- US-A- 5 030 833
- US-A- 5 979 142

## Beschreibung

Die Erfindung betrifft eine Vorrichtung und ein Verfahren zum Überprüfen, ob eine Halmtasche mit einem darauf befindlichen Kleber auf einem Folienbentel mit diesem Kleber aufgeklebt ist. Weiterhin betrifft die Erfindung eine Vorrichtung und ein Verfahren zum Aufkleben einer Halmtasche mit einem darauf befindlichen Kleber auf einem Folienbeutel.

Bei der Herstellung von Folienbeuteln als Getränkeverpackung, wird oft ein Trinkhalm auf der Getränkeverpackung angebracht. Oft ist der Trinkhalm aus hygienischen Gründen in einer Halmtasche eingeschlossen. Hierbei wird der Trinkhalm oder die Halmtasche mit Kleber auf der Getränkeverpackung angebracht, wobei der Kleber evtl. bereits vorher auf dem Trinkhalm oder der Halmtasche aufgebracht ist.

Aus der DE 31 28 280 A1 ist das Überprüfen, ob ein Überdruckventil aus Kunststoff auf einer Packung aufgeklebt ist, bekannt. Dabei wird eine Lumineszenz des kleber angeregt und detektiert. Aus der US 3,650,400 ist ein optisches Erfassungssystem, das bei Umgebungslicht einsetzbar ist, bekannt.

Aus der US 5,979,142 sind Vorrichtungen und Verfahren gemäß der Oberbegriffen der Ansprüche 1, 6, 8 und 13 bekannt.
Da es bei dem Aufbringen des Trinkhalms auf der Getränkeverpackung zu Fehlern kommen kann, ist es nötig in einem anschließenden Schritt zu prüfen, ob auf einer Getränkeverpackung tatsächlich ein Trinkhalm angebracht wurde. Aufgabe der vorliegenden Erfindung ist es daher, eine Vorrichtung und ein Verfahren zum Überprüfen, ob eine Halmtasche auf einem Folienbeutel aufgeklebt worden ist, zur Verfügung zu stellen, das zuverlässig die Überprüfung durchführt und möglichst zuverlässig arbeitet.

Weiterhin ist es eine Aufgabe der vorliegenden Erfindung, eine Vorrichtung und ein Verfahren zum Aufkleben einer Halmtasche auf einem Folienbeutel zur Verfügung zu stellen, mit dem zuverlässig das Aufkleben durchgeführt wird.

Die Aufgabe wird gelöst durch eine Vorrichtung nach Anspruch 1 und 6 sowie durch ein Verfahren nach Anspruch 8 und 13. Bei der Vorrichtung ist eine Anregungseinrichtung vorgesehen, die die Emission von Lumineszenzlicht durch den Kleber anregen kann. Diese Anregungseinrichtung kann beispielsweise eine Beleuchtungseinrichtung sein, mit der der Kleber beleuchtet werden kann. Lumineszenzlicht, das in dem Kleber entsteht, kann mit einer Detektionseinrichtung zur selektiven Detektion des Lumineszenzlichts detektiert werden. Selektiv soll der Detektor möglichst nur das Lumineszenzlicht, jedoch nicht das Licht der Beleuchtungseinrichtung detektieren. Dies kann beispielsweise dadurch erreicht werden, dass ein entsprechender Spektralfilter in der Detektionseinrichtung vorgesehen ist, der das Licht der Beleuchtungseinrichtung im Wesentlichten abschirmt (z.B. absorbiert oder reflektiert), das Lumineszenzlicht des Klebers jedoch hindurchlässt. Jede derartige frequenz- bzw. wellenlängeselektive Detektion oder auch andersartige Selektion des Lumineszenzlichts ist erfindungsgemäß möglich. Bevorzugt ist als Lumineszenz eine Fluoreszenz, die im Vergleich zur Phosphoreszenz unmittelbar entsteht und nicht mit einer Zeitverzögerung.

Bevorzugterweise weist die Vorrichtung eine Einrichtung zum Abdunkeln der Halmtasche und des Folienbeutels auf, so dass die Detektion möglichst ungestört von Umgebungslicht erfolgen kann.

Jedoch ist es auch möglich, die Detektionseinrichtung und/oder die Anregungseinrichtung so auszulegen, dass Umgebungslicht ohnehin nicht störend ist. Dies kann beispielsweise dadurch geschehen, dass das Signal des Detektors einem Lock-in-Verstärker zugeführt wird, wobei das Referenzsignal für den Lock-in Verstärker aus einer Modulation der Anregung (etwa des Beleuchtungslichts) gewonnen wird.

Auch ist es möglich, dass die Anregungseinrichtung (Beleuchtungseinrichtung) nur einen oder mehrere Anregungspulse (Lichtpulse) aussendet und die Detektionseinrichtung entsprechend nur eine oder mehrere kurze Detektionspulse detektiert, die somit darauf hindeuten, dass es sich um Lumineszenzlicht und nicht um Umgebungslicht handelt.

Falls die Intensität des Lumineszenzlichts, im Vergleich zum Umgebungslicht, ohnehin ausreichend stark ist, ist es auch möglich, auf eine Abdunklung oder andere Unterscheidungsmittel zu verzichten.

Die Vorrichtung zum Aufkleben einer Halmtasche mit einem darauf befindlichen Kleber auf einem Folienbeutel kann beispielsweise mit einem entsprechend ausgestalteten Applikator erfolgen, der nacheinander oder gleichzeitig auf einem oder mehreren Folienbeuteln eine Halmtasche aufklebt. Der Applikator kann auch mehrere Applikatoreinheiten umfassen, die beispielsweise abwechselnd die Reihe von Folienbeuteln mit den Halmtaschen versehen.

Die Vorrichtung weist stromab des Applikators oder einer Applikatoreinrichtung eine Vorrichtung zum Überprüfen auf.

Bei dem Verfahren zum Überprüfen, ob eine Halmtasche mit einem darauf befindlichen Kleber auf einem Folienbeutel mit dem Kleber aufgeklebt ist, wird der Kleber angeregt, d.h. beispielsweise mit Licht beleuchtet, und anschließend selektiv das von dem Kleber erzeugte Lumineszenzlicht detektiert.

Hierbei ist es vorteilhaft, wenn der Kleber optisch leicht zugänglich ist, was beispielsweise durch eine wenigstens teilweise transparenten Halmtasche ermöglicht wird.

Bei den in den Halmtaschen eingeschweißten Trinkhalmen ist es ausreichend, dass der Kleber auch seitlich des Trinkhalms sichtbar ist, falls der Halm selber nicht ausreichend transparent sein sollte.

Der Kleber ist vorzugsweise mit einem Lumineszenzfarbstoff in einer geeigneten Konzentration versehen. Hierbei sind Konzentrationen im Bereich von hundertstel Prozent bis zu ein, zwei, fünf oder mehreren Prozent vorteilhaft. Besonders vorteilhaft ist eine Konzentration im Bereich zwischen 0,1 und 1,0 Prozent. Dies hängt jedoch auch immer von dem konkret verwendeten Farbstoff und seiner Lumineszenzstärke ab, da unterschiedliche Farbstoffe unterschiedlich stark lumineszieren. Verschiedene Lumineszenzfarbstoffe absorbieren und erzeugen Licht bei verschiedenen Wellenlängen. Vorteilhaft ist ein Lumineszenzfarbstoff, der Licht im ultravioletten Spektralbereich absorbiert und im sichtbaren, bevorzugterweise im blauen, Spektralbereich emittiert.

Je nach verwendetem Lumineszenzfarbstoff müssen die Beleuchtungseinrichtungen und die Detektionseinrichtungen entsprechend (z. B. in Bezug auf Lichtstärke oder Wellenlänge) angepasst sein.

Bei dem Verfahren zum Aufkleben einer Halmtasche wird also ein Kleber mit einer entsprechenden Lumineszenz verwendet und nach dem Aufkleben der Halmtasche auf demFolienbeutel ein Verfahren zum Überprüfen, ob eine Halmtasche auf einem Folienbeutel aufgeklebt ist, durchgeführt.

Eine Ausführungsform der Vorrichtung und der Verfahren wird anhand der beiliegenden Figuren erläutert. Dabei zeigt:
Fig. 1 eine schematische Darstellung einer Vorrichtung zum Überprüfen, ob eine Halmtasche auf einem Folienbeutel aufgeklebt ist und
Fig. 2 eine Darstellung einer Vorrichtung zum Aufkleben einer Halmtasche auf einem Folienbeutel.

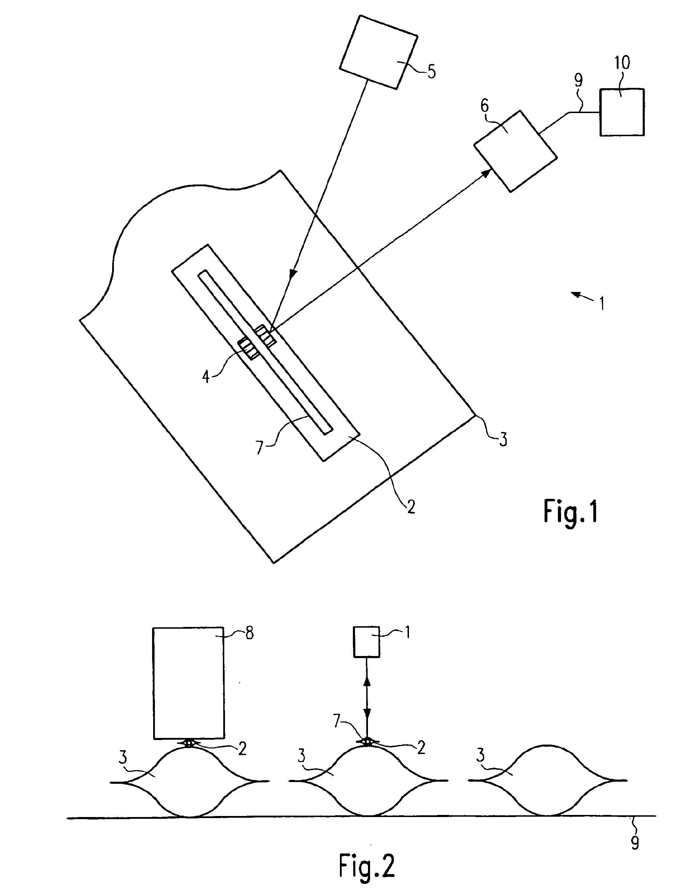

In Fig. 1 ist Folienbeutel 3 in liegender Position dargestellt. Auf dem Folienbeutel 3 ist mit Kleber 4 eine Halmtasche 2 aufgeklebt. Die Halmtasche 2 umschließt einen Trinkhalm 7. Die Halmtasche 2 ist aus einem durchsichtigen Kunststoff gefertigt.

Eine Beleuchtungseinrichtung 5 ist so ausgelegt, dass sie den Kleber 4 mit Licht beleuchten kann. Der Kleber 4 emittiert bei Beleuchtung Lumineszenzlicht. Dieses Lumineszenzlicht kann mit einer geeignet angeordneten Detektionseinrichtung 6 detektiert werden. Die Detektionseinrichtung 6 ist über eine Signalleitung 9 mit einer Auswerteeinrichtung 10 verbunden. Die Auswerteeinrichtung 10 entscheidet auf Grund des Detektionssignals der Detektionseinrichtung 6, ob Kleber 4 vorhanden ist oder nicht. Da die Halmtasche 2 mit dem Kleber 4 versehen ist, bevor die Halmtasche 2 auf dem Folienbeutel 3 aufgeklebt wird, folgt aus dem Vorhandensein des Klebers 4 auch das Vorhandensein der Halmtasche 2.

Bei dem Verfahren wird ein Folienbeutel 3 in den Bereich der Vorrichtung zum Überprüfen 1 gebracht. Dies kann beispielsweise mit einem Fließband oder einem sonstigen Förderer geschehen. Die Beleuchtungseinrichtung 5 beleuchtet den Kleber 4, der, falls seine eigene Lumineszenz nicht ausreicht, mit einem geeigneten Lumineszenzfarbstoff versehenen ist. Das so erzeugte Lumineszenzlicht wird von der Detektionseinrichtung 6 detektiert. Das Detektionssignal wird über eine Signalleitung 9 an eine Auswerteeinrichtung 10 weitergegeben. Diese Auswerteeinrichtung 10 steuert nun das Aussortieren des als fehlerhaft erkannten Folienbeutels 3, falls auf diesem kein Kleber 4 detektiert wurde. Der so ausgesonderte Folienbeutel 3 kann beispielsweise der Applikation von Halmtaschen erneut zugeführt werden.

Auch ist es möglich, dass die Auswerteeinrichtung 10 einen nachgeschalteten Applikator veranlasst, eine Halmtasche 2 mit einem Trinkhalm 7 darin aufzubringen.

Es wird in geeigneter Weise ermittelt, ob im Bereich der Vorrichtung zum Überprüfen 1 ein Folienbeutel 3 vorliegt oder nicht. Nur wenn ein Folienbeutel 3 vorhanden ist, ist das Vorhandensein oder das Fehlen des Klebers 4 festzustellen. Ob ein Folienbeutel vorhanden ist oder nicht kann beispielsweise mit einer Lichtschranke oder auch einem Näherungssensor, der optisch oder akustisch arbeitet, geschehen. Auch ein Sensor zur Detektion von Metall (beispielsweise Aluminium), wie es in Folienbeuteln oder Getränkeverpackungen verwendet wird, ist hier geeignet.

In Fig. 2 ist eine Vorrichtung zum Aufkleben einer Halmtasche 2 auf einem Folienbeutel 3 gezeigt. Ein Applikator 8 dient zum Aufkleben einer Halmtasche 2 auf dem Folienbeutel 3. Auf der Halmtasche 2 ist hierbei Kleber 4 aufgebracht, mit der die Halmtasche 2 auf dem Folienbeutel 3 anhaftet.

Während in Fig. 2 nur eine Vorrichtung 8 als Applikator gezeigt ist, kann der Applikator 8 auch selber mehrere Applikationseinrichtungen umfassen, die jeweils beispielsweise abwechselnd auf die Folienbeutel 3 die Halmtaschen 2 aufbringen können.

In Fig. 2 ist ein Förderband 9 gezeigt, mit dem die Folienbeutel 3 von dem Applikator 8 zu der Vorrichtung zum Überprüfen 1 gefördert werden können.

Die Vorrichtung 1 ist hierbei stromab des Applikators 8 angeordnet und dient zum Überprüfen, ob eine Halmtasche 2 auf dem Folienbeutel 3 aufgeklebt worden ist.

Stromab von der Vorrichtung zum Überprüfen 1 ist eine nicht in Fig. 2 dargestellte Aussortiereinrichtung vorgesehen, die Folienbeutel 3, die nicht mit einer Halmtasche 2 versehen sind, aussortiert. Stattdessen kann auch ein weiterer Applikator 8 vorgesehen sein, der die fehlende Halmtasche 2 aufbringt.

Die Aussortiereinrichtung oder der weitere Applikator 8 kann auch bei der Vorrichtung 1 angeordnet sein, so dass unmittelbar nach der Detektion das Aussortieren bzw. Anbringen eines ersten Gegenstandes 2 erfolgen kann.

Bei dem Verfahren zum Aufkleben wird ein Folienbeutel 3 auf dem Förderband 9 zu dem Applikator 8 gefördert und dort mit einer Halmtasche 2 versehen. Anschließend wird der Folienbeutel 3 mit dem Förderer 9 zu der Vorrichtung zum Überprüfen 1 gefördert. Hier wird, wie in Bezug auf Fig. 1 erläutert, überprüft, ob Kleber 4 und somit die Halmtasche 2 vorhanden ist. Anschließend wird der Folienbeutel 3 weiter auf dem Förderer 9 gefördert, um, falls eine Halmtasche 2 fehlt, aussortiert zu werden oder anschließend eine Halmtasche aufgebracht zu bekommen. Das Aussortieren oder Aufbringen kann auch unmittelbar nach dem Überprüfen stattfinden ohne den Folienbeutel vorher wesentlich weiter zu befördern.

## Patentansprüche

1. Vorrichtung zum Überprüfen (1), ob eine Halmtasche (2) mit einem darauf befindlichen Kleber (4) auf einer Getränkeverpackung (3) mit dem Kleber (4) aufgeklebt ist, wobei die Getränkeverpackung (3) ein Folienbeutel ist, mit Mitteln zum Ermitteln, ob eine Getränkeverpackung im Bereich der Vorrichtung vorliegt, **gekennzeichnet durch**
eine Anregungseinrichtung (5) zum Anregen einer Lumineszenz des Klebers (4) und
eine Detektionseinrichtung (6) zur selektiven Detektion von Lumineszenzlicht des Klebers (4).

2. Vorrichtung nach Anspruch 1, **dadurch gekennzeichnet, dass** die Anregungseinrichtung eine Beleuchtungseinrichtung (5) insbesondere zur Beleuchtung mit UV-Licht ist.

3. Vorrichtung nach einem der Ansprüche 1 oder 2, **dadurch gekennzeichnet, dass** die Detektionseinrichtung (6) für die Detektion im sichtbaren Spektralbereich, bevorzugt im blauen Spektralbereich ausgelegt ist.

4. Vorrichtung nach einem der Ansprüche 1 bis 3, **dadurch gekennzeichnet, dass** die Halmtasche eine zumindest teilweise durchsichtige Halmtasche ist.

5. Vorrichtung nach einem der Ansprüche 1 bis 4, **gekennzeichnet durch** eine Auswerteeinrichtung (10) zum Auswerten des Detektionssignals.

6. Vorrichtung zum Aufkleben einer Halmtasche (2) mit einem darauf befindlichen Kleber (4) auf einer Getränkeverpackung (3) mit einem Applikator (8) zum Aufkleben der Halmtasche (2), wobei die Getränkeverpackung (3) ein Folienbeutel ist,
**gekennzeichnet durch**
eine Vorrichtung zum Überprüfen (1) nach einem der Ansprüche 1 bis 5.

7. Vorrichtung nach Anspruch 6 **dadurch gekennzeichnet, dass** eine Aussortiereinrichtung oder ein weiterer Applikator zum Aufkleben einer Halmtasche (2) bei oder stromab der Vorrichtung zum Überprüfen (1) vorgesehen ist.

8. Verfahren zum Überprüfen, ob eine Halmtasche (2) mit einem darauf befindlichen Kleber (4) auf einer Getränkeverpackung (3) mit dem Kleber aufgeklebt ist, wobei die Getränkeverpackung (3) ein Folienbeutel ist, mit einem Ermitteln, ob eine Getränkeverpackung vorliegt,
**gekennzeichnet durch**
das Anregen des Klebers (4) zur Lumineszenz
und die selektive Detektion von im Kleber (4) erzeugtem Lumineszenzlicht.

9. Verfahren nach Anspruch 8, **dadurch gekennzeichnet, dass** zur Anregung Beleuchtung mit Licht, insbesondere mit UV-Licht verwendet wird.

10. Verfahren nach einem der Ansprüche 8 oder 9, **dadurch gekennzeichnet, dass** die Detektion im sichtbaren Spektralbereich, bevorzugt im blauen Spektralbereich erfolgt.

11. Verfahren nach einem der Ansprüche 8 bis 10, **dadurch gekennzeichnet, dass** die Halmtasche (2) eine zumindest teilweise durchsichtige Halmtasche ist.

12. Verfahren nach einem der Ansprüche 8 bis 11, **dadurch gekennzeichnet, dass** in dem Kleber (4) ein Lumineszenzfarbstoff vorhanden ist.

13. Verfahren zum Aufkleben einer Halmtasche (2) auf eine Getränkeverpackung (3) bei dem mit einem Applikator (8) eine Halmtasche auf eine Getränkeverpackung aufgeklebt wird, wobei die Getränkeverpackung (3) ein Folienbeutel ist,
**dadurch gekennzeichnet, dass**
ein Verfahren zum Überprüfen nach einem der Ansprüche 8 bis 12 durchgeführt wird.

14. Verfahren nach Anspruch 13 **dadurch gekennzeichnet, dass** nach dem Verfahren zum Überprüfen ein Schritt des Aussortierens der Getränkeverpackung (3) oder des Anbringens einer Halmtasche (2) auf der Getränkeverpackung (3) erfolgt.

## Claims

1. A device for checking (1) whether a straw-bag (2) with an adhesive (4) thereon is glued onto a drink package (3) by means of the adhesive (4), said drink package (3) being a foil-bag and said device comprising means for detecting whether a drink package is present in the area of the device,
**characterized by**
an excitation unit (5) for exciting luminescence of the adhesive (4) and
a detection unit (6) for the selective detection of luminescence light of the adhesive (4).

2. A device according to claim 1, **characterized in that** the excitation unit is an illumination unit (5) especially for illuminating with UV light.

3. A device according to one of the claims 1 or 2, **characterized in that** the detection unit (6) is designed for detection in the visible spectral region, preferably in the blue spectral region.

4. A device according to one of the claims 1 to 3, **characterized in that** the straw-bag is a straw-bag which is preferably at least partly transparent.

5. A device according to one of the claims 1 to 4, **characterized by** an evaluation unit (10) for evaluating the detection signal.

6. A device for gluing a straw-bag (2) with an adhesive (4) thereon onto a drink package (3), with an applicator (8) for gluing on the straw-bag (2), said drink package (3) being a foil-bag,
**characterized by**
a device for checking (1) according to one of the claims 1 to 5.

7. A device according to claim 6, **characterized in that** a rejection unit or an additional applicator for gluing on a straw-bag (2) is provided at or downstream of the device for checking (1).

8. A method for checking whether a straw-bag (2) with an adhesive (4) thereon is glued onto a drink package (3) by means of the adhesive (4), said drink package (3) being a foil-bag, said method comprising the step of checking whether a drink package is present,
**characterized by**
the excitation of the adhesive (4) to luminescence
and the selective detection of luminescence light generated in the adhesive (4).

9. A method according to claim 8, **characterized in that** illumination with light, especially with UV light, is used for the excitation.

10. A method according to one of the claims 8 or 9, **characterized in that** the detection occurs in the visible spectral region, preferably in the blue spectral region.

11. A method according to one of the claims 8 to 10, **characterized in that** the straw-bag (2) is an at least partially transparent straw-bag.

12. A method according to one of the claims 8 to 11, **characterized in that** the adhesive (4) contains a luminescence dye.

13. A method for gluing a straw-bag (2) onto a drink package (3), wherein a straw-bag is glued onto a drink package with an applicator (8), said drink package (3) being a foil-bag,
**characterized in that**
a method for checking is performed according to one of the claims 8 to 12.

14. A method according to claim 13, **characterized in that** the method for checking is followed by a step of rejecting the drink package (3) or of affixing a straw-bag (2) to the drink package (3).

## Revendications

1. Dispositif pour vérifier (1) si un étui à paille (2) avec une colle (4) située dessus est collé sur un emballage de boisson (3) avec la colle (4), l'emballage de boisson (3) étant un sachet plastique, avec des moyens permettant de déterminer la présence ou l'absence d'un emballage de boisson dans la zone du dispositif,
**caractérisé par**
un dispositif d'excitation (5) permettant d'exciter la luminescence de la colle (4) et
un dispositif de détection (6) servant à la détection sélective de la luminescence de la colle (4).

2. Dispositif selon la revendication 1, **caractérisé en ce que** le dispositif d'excitation est un dispositif d'éclairage (5), en particulier d'éclairage par lumière UV.

3. Dispositif selon l'une quelconque des revendications 1 ou 2, **caractérisé en ce que** le dispositif de détection (6) est conçu pour la détection dans le domaine visible du spectre, de préférence dans la partie bleue du spectre.

4. Dispositif selon l'une quelconque des revendications 1 à 3, **caractérisé en ce que** l'étui à paille est un étui à paille au moins partiellement transparent.

5. Dispositif selon l'une quelconque des revendications 1 à 4, **caractérisé par** un dispositif d'évaluation (10) permettant d'évaluer le signal de détection.

6. Dispositif de collage d'un étui à paille (2) avec une colle (4) située dessus sur un emballage de boisson (3) avec un applicateur (8) servant à coller l'étui à paille (2), l'emballage de boisson (3) étant un sachet plastique,
**caractérisé par**
un dispositif de vérification (1) selon l'une quelconque des revendications 1 à 5.

7. Dispositif selon la revendication 6, **caractérisé en ce qu'**il est prévu un dispositif de triage ou un autre applicateur permettant de coller un étui à paille (2) sur ou en aval du dispositif de vérification (1).

8. Procédé pour vérifier si un étui à paille (2) avec une colle (4) située dessus est collé sur un emballage de boisson (3) avec la colle, l'emballage de boisson (3) étant un sachet plastique, avec détermination de la présence ou de l'absence d'un emballage de boisson,
**caractérisé par**
l'excitation de la luminescence de la colle (4)
et la détection sélective de la luminescence générée dans la colle (4).

9. Procédé selon la revendication 8, **caractérisé en ce que** pour l'excitation, on utilise un éclairage par lumière, en particulier par lumière UV.

10. Procédé selon l'une quelconque des revendications 8 ou 9, **caractérisé en ce que** la détection se fait dans le domaine visible du spectre, de préférence dans la partie bleue du spectre.

11. Procédé selon l'une quelconque des revendications 8 à 10, **caractérisé en ce que** l'étui à paille (2) est un étui à paille au moins partiellement transparent.

12. Procédé selon l'une quelconque des revendications 8 à 11, **caractérisé en ce que** la colle (4) contient un colorant luminescent.

13. Procédé de collage d'un étui à paille (2) sur un emballage de boisson (3) dans lequel un étui à paille est collé sur l'emballage de boisson avec un applicateur (8), l'emballage de boisson (3) étant un sachet plastique,
**caractérisé en ce que**
un procédé de vérification est réalisé selon l'une quelconque des revendications 8 à 12.

14. Procédé selon la revendication 13, **caractérisé en ce qu'**après le procédé de vérification, une étape de triage de l'emballage de boisson (3) ou d'application d'un étui à paille (2) sur l'emballage de boisson (3) a lieu.
